# EUROPEAN PATENT APPLICATION

(11) **EP 3 690 284 A1**
(43) Date of publication of application: **05.08.2020**
(21) Application number: 19211002.1
(22) Date of filing: 22.11.2019
(51) Int. Cl.: F16H 37/02, F16D 41/14

(54) **VEHICLE POWER TRANSMISSION DEVICE**

(30) Priority: 31.01.2019 JP 2019016423
(71) Applicant: TOYOTA JIDOSHA KABUSHIKI KAISHA, Toyota-shi, Aichi-ken, 471-8571 (JP)
(72) Inventor: OHGATA, Yusuke, Aichi-ken, Aichi 471-8571 (JP); OITA, Shinji, Aichi-ken, Aichi 471-8571 (JP); NITANI, Hiromitsu, Aichi-ken, Aichi 471-8571 (JP); FUJIKAWA, Megumi, Aichi-ken, Aichi 471-8571 (JP); OISHI, Yoshihiro, Aichi-ken, Aichi 444-1192 (JP)
(74) Representative: J A Kemp LLP

(57) **Abstract**

A vehicle power transmission device includes: an input shaft (20); an output shaft (30); a first power transmission path (PT1) configured to transmit power between the input shaft (20) and the output shaft (30); and a second power transmission path (PT2) configured to transmit power between the input shaft (20) and the output shaft (30). The first power transmission path (PT1) includes a mode-switching clutch (S1) configured to be switched between a one-way mode and a free mode, the one-way mode being a mode in which power acting in a forward rotation direction is transmitted while power acting in a reverse rotation direction is interrupted, and the free mode being a mode in which power acting in the forward rotation direction and power acting in the reverse rotation direction are interrupted. The second power transmission path (PT2) includes a control clutch (C2) configured such that a torque capacity of the control clutch (C2) is controllable.

## Description

### BACKGROUND OF THE INVENTION

### 1. Field of the Invention

The invention relates to a vehicle power transmission device that includes a first power transmission path and a second power transmission path provided in parallel between an input shaft and an output shaft.

### 2. Description of Related Art

Japanese Patent No. 5765485 (JP 5765485 B) describes a vehicle power transmission device that includes a first power transmission path and a second power transmission path provided in parallel between an input shaft and an output shaft. In the power transmission device described in JP 5765485 B, a gear train and a first clutch are provided in the first power transmission path, and a continuously variable transmission and a second clutch are provided in the second power transmission path. When a power transmission path is switched between the first power transmission path and the second power transmission path, clutch-to-clutch control of the first clutch and the second clutch is performed.

### SUMMARY OF THE INVENTION

In the vehicle power transmission device of JP 5765485 B, the clutch-to-clutch control is performed in a transition period when the power transmission path is switched. Therefore, torque capacities of the first clutch and the second clutch need to be precisely controlled, which makes the control complicated.

The invention provides a vehicle power transmission device that includes a first power transmission path and a second power transmission path provided in parallel and that is configured to suppress complication of control in a transition period when a power transmission path is switched.

An aspect of the invention relates to a vehicle power transmission device. The vehicle power transmission device includes: an input shaft; an output shaft; a first power transmission path configured to transmit power between the input shaft and the output shaft; and a second power transmission path configured to transmit power between the input shaft and the output shaft. The first power transmission path includes a mode-switching clutch configured to be switched between a one-way mode and a free mode, the one-way mode being a mode in which power acting in a forward rotation direction is transmitted while power acting in a reverse rotation direction is interrupted, and the free mode being a mode in which power acting in the forward rotation direction and power acting in the reverse rotation direction are interrupted. The second power transmission path includes a control clutch configured such that a torque capacity of the control clutch is controllable.

In the vehicle power transmission device according to the above aspect, the first power transmission path may include a differential mechanism having an input element, an output element, and a reaction force element, the input element receiving an input of power from a power source, the reaction force element configured to be stopped from rotating to cause the input element and the output element to rotate in opposite directions, the mode-switching clutch may be disposed to connect the input element and the output element, and the first power transmission path may include a brake configured to connect and disconnect the reaction force element and a non-rotating member.

In the vehicle power transmission device according to the above aspect, the brake may be configured to connect the reaction force element and the non-rotating member when a vehicle travels backward, the mode-switching clutch may be configured to be switched to the free mode when the vehicle travels backward, and the control clutch may be configured to be disengaged when the vehicle travels backward.

In the vehicle power transmission device according to the above aspect, the first power transmission path may include a gear mechanism having a prescribed speed ratio, the second power transmission path may include a transmission, and the speed ratio between the input shaft and the output shaft in the first power transmission path may be set to a value larger than a maximum speed ratio set between the input shaft and the output shaft in the second power transmission path.

With the vehicle power transmission device according to the above aspect, when the mode-switching clutch is switched to the one-way mode and the control clutch is disengaged, forward traveling based on transmission of power from the power source to the first power transmission path is enabled. Further, when the mode-switching clutch is switched to the one-way mode or the free mode and the control clutch is engaged, forward traveling based on transmission of power from the power source to the second power transmission path is enabled. When the mode-switching clutch is switched to the one-way mode during the switching transition period in which the power transmission path is switched between the first power transmission path and the second power transmission path, the mode-switching clutch functions as a one-way clutch. Therefore, power transmission and interruption of the first power transmission path during the switching transition period is automatically switched at an appropriate timing by the mode-switching clutch, which suppresses a shock that occurs during the switching transition period. In addition, since the power transmission path can be switched only by controlling the torque capacity of the control clutch, it is possible to suppress complication of control during the switching transition period.

Furthermore, with the vehicle power transmission device according to the above aspect, when power from the power source is input to the input element with the mode-switching clutch switched to the one-way mode, the power is transmitted to the output element via the mode-switching clutch. This enables forward traveling based on the transmission of power to the first power transmission path. In addition, when power from the power source is transmitted to the input element with the mode-switching clutch switched to the free mode and the brake engaged, the rotation of the reaction force element is stopped so that the output element is rotated in the opposite direction. This enables reverse traveling based on the transmission of power acting in the vehicle reverse traveling direction to the first power transmission path. As described above, the mode of the mode-switching clutch and the engagement state of the brake are switched, so that the forward traveling and the reverse traveling using the first power transmission path become possible.

With the vehicle power transmission device according to the above aspect, when the brake is engaged, the output element is reversely rotated with respect to the input element. At this time, if the mode-switching clutch is switched to the one-way mode, the input element and the output element interfere with each other, thereby making the rotation difficult. In contrast, when the mode-switching clutch is switched to the free mode, the relative rotation between the input element and the output element is allowed, which makes the reverse rotation of the output element possible.

With the vehicle power transmission device according to the above aspect, the speed ratio in the first power transmission path is larger than the maximum speed ratio of the second power transmission path. Therefore, with the control clutch engaged, the rotational speed of a rotating member on a downstream side (output shaft side) of the mode-switching clutch is higher than the rotational speed of a rotating element on an upstream side (input shaft side) of the mode-switching clutch. At this time, although the mode-switching clutch is switched to the one-way mode, the mode-switching clutch is idling and the power transmission is interrupted, so that the power transmission in the first power transmission path is interrupted. Thus, during the forward traveling achieved by engagement of the control clutch and power transmission to the second power transmission path, the first power transmission path is interrupted, so that the interference between the first power transmission path and the second power transmission path is suppressed.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a skeleton diagram illustrating a schematic configuration of a vehicle to which the invention is applied;
FIG. 2 is a sectional view illustrating a structure around a forward/reverse switching device in a power transmission device of FIG. 1;
FIG. 3 is a cross-sectional view of a mode-switching clutch taken along a cutting line A represented by a long dashed short dashed line, with the mode-switching clutch switched to a one-way mode;
FIG. 4 is a cross-sectional view of the mode-switching clutch taken along the cutting line A represented by the long dashed short dashed line, with the mode-switching clutch switched to a free mode;
FIG. 5 is an engagement operation table showing engagement states of engagement devices for switching a power transmission state of the power transmission device of FIG. 1;
FIG. 6 is a skeleton diagram schematically showing a flow of power transmission at the time when the power transmission device of FIG. 1 is switched to gear driving (forward traveling);
FIG. 7 is a skeleton diagram schematically showing a flow of power transmission at the time when the power transmission device of FIG. 1 is switched to belt driving; and
FIG. 8 is a skeleton diagram schematically showing a flow of power transmission at the time when the power transmission device of FIG. 1 is switched to gear driving (reverse traveling).

### DETAILED DESCRIPTION OF EMBODIMENTS

Hereinafter, embodiments of the invention will be described in detail with reference to the drawings. In the embodiments below, the drawings are appropriately simplified or modified, and respective dimensional ratios, shapes, and the like of the components are not necessarily drawn accurately.

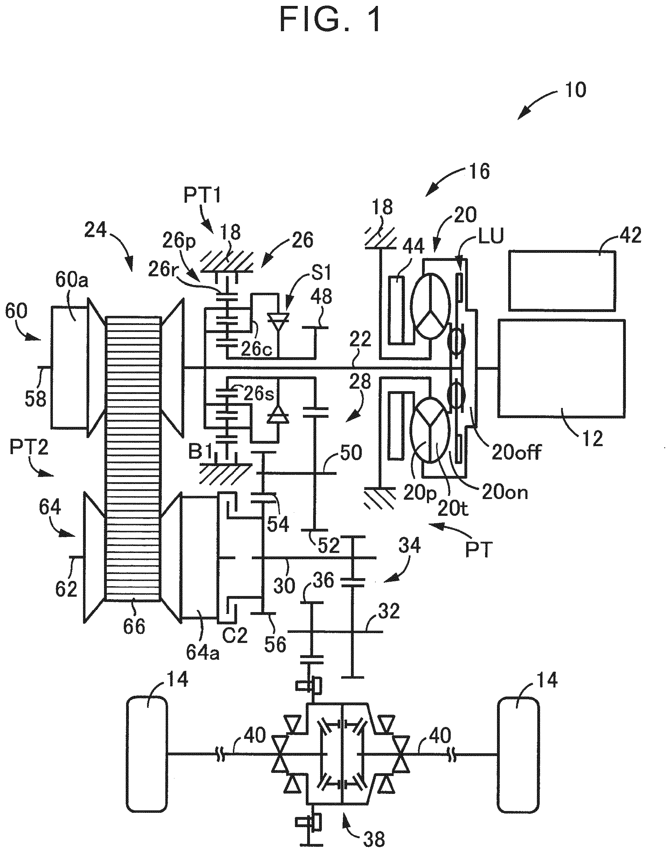

FIG. 1 is a skeleton diagram illustrating a schematic configuration of a vehicle 10 to which the invention is applied. In FIG. 1, the vehicle 10 includes a vehicle power transmission device 16 (hereinafter, referred to as a power transmission device 16) that transmits power output from an engine 12 functioning as a power source to driving wheels 14.

The power transmission device 16 is provided between the engine 12 and the driving wheels 14. The power transmission device 16 includes, in a case 18 serving as a non-rotating member, a known torque converter 20, an input shaft 22, a continuously variable transmission 24, a forward/reverse switching device 26, gear mechanism 28, an output shaft 30, a counter shaft 32, a reduction gear device 34, a gear 36, a differential device 38, and a pair of right and left axles 40. The torque converter 20 serves as a fluid transmission device connected to the engine 12. The input shaft 22 is connected to the torque converter 20. The continuously variable transmission 24 is a belt-type continuously variable transmission and connected to the input shaft 22. The forward/reverse switching device 26 is connected to the input shaft 22. The gear mechanism 28 is provided in parallel with the continuously variable transmission 24 and connected to the input shaft 22 via the forward/reverse switching device 26. The output shaft 30 is an output rotating member shared between the continuously variable transmission 24 and the gear mechanism 28. The reduction gear device 34 is formed of a pair of gears that mesh with each other. One of the gears is provided on the output shaft 30 so as not to rotate relative to the output shaft 30 and the other of the gears is provided on the counter shaft 32 so as not to rotate relative to the counter shaft 32. The gear 36 is provided on the counter shaft 32 so as not to rotate relative to the counter shaft 32. The differential device 38 is connected to the gear 36 so as to be able to transmit power to the gear 36. The pair of axles 40 connects the differential device 38 to the right and left driving wheels 14. The continuously variable transmission 24 can be regarded as a transmission according to the invention.

In the power transmission device 16 configured as described above, power output from the engine 12 is supplied to the right and left driving wheels 14 via the torque converter 20, the forward/reverse switching device 26, the gear mechanism 28, the reduction gear device 34, the differential device 38, the axles 40, etc. in this order. Alternatively, in the power transmission device 16, power output from the engine 12 is transmitted to the right and left driving wheels 14 via the torque converter 20, the continuously variable transmission 24, the reduction gear device 34, the differential device 38, the axles 40, etc. in this order. The term "power" has the same meaning as torque and drive power, unless particularly distinguished.

The power transmission device 16 includes the gear mechanism 28 and the continuously variable transmission 24 provided in parallel in a power transmission path PT between the engine 12 and the driving wheels 14. Specifically, the power transmission device 16 is provided between the input shaft 22 and the output shaft 30, and includes two power transmission paths each transmitting power from the engine 12 from the input shaft 22 to the output shaft 30. The two power transmission paths are composed of a first power transmission path PT1 including the gear mechanism 28 and a second power transmission path PT2 including the continuously variable transmission 24. Thus, the power transmission device 16 has the first power transmission path PT1 and the second power transmission path PT2 provided in parallel between the input shaft 22 and the output shaft 30.

The first power transmission path PT1 includes the forward/reverse switching device 26 and the gear mechanism 28 that are differential mechanisms, and transmits power from the engine 12 from the input shaft 22 to the driving wheels 14 via the gear mechanism 28. In the first power transmission path PT1, the forward/reverse switching device 26 and the gear mechanism 28 are arranged in this order in a direction from the engine 12 toward the driving wheels 14.

The second power transmission path PT2 includes the continuously variable transmission 24 and a belt-traveling clutch C2, and is a power transmission path that transmits power from the engine 12 from the input shaft 22 to the driving wheels 14 via the continuously variable transmission 24. In the second power transmission path PT2, the continuously variable transmission 24 and the belt-traveling clutch C2 are arranged in this order in the direction from the engine 12 toward the driving wheels 14. The belt-traveling clutch C2 is a hydraulic friction engagement device, of which torque capacity can be precisely adjusted. The belt-traveling clutch C2 can be regarded as a control clutch according to the invention.

The continuously variable transmission 24 that constitutes the second power transmission path PT2 includes a primary shaft 58, a primary pulley 60, a secondary shaft 62, a secondary pulley 64, and a transmission belt 66. The primary shaft 58 is provided coaxially with the input shaft 22 and connected to the input shaft 22 so as not to rotate relative to the input shaft 22. The primary pulley 60 is provided on the primary shaft 58 and has a variable effective diameter. The secondary shaft 62 is provided coaxially with the output shaft 30. The secondary pulley 64 is provided on the secondary shaft 62, and has a variable effective diameter. The transmission belt 66 serving as a transmitting element is wound between the pulleys 60 and 64. The continuously variable transmission 24 is a well-known belt-type continuously variable transmission that transmits power with frictional forces between the transmission belt 66 and each of the pulleys 60 and 64, and transmits the power from the engine 12 to the driving wheels 14 side. In the continuously variable transmission 24, the effective diameter of the primary pulley 60 is changed by a hydraulic actuator 60a, and the effective diameter of the secondary pulley 64 is changed by a hydraulic actuator 64a, whereby a speed ratio ycvt of the continuously variable transmission 24 is adjusted.

In the first power transmission path PT1 having the gear mechanism 28, a speed ratio EL (i.e., input shaft rotational speed Nin / output shaft rotational speed Nout) between the input shaft 22 and the output shaft 30 is set to a value larger than a maximum speed ratio ymax of the continuously variable transmission 24, which is the maximum speed ratio in the second power transmission path PT2. That is, the speed ratio EL is set to a speed ratio on the lower side (lower speed side) with respect to the maximum speed ratio γmax of the continuously variable transmission 24. Thus, in the second power transmission path PT2, a speed ratio on the higher side (higher speed side) than the speed ratio of the first power transmission path PT1 is formed. The input shaft rotational speed Nin is a rotational speed of the input shaft 22, and the output shaft rotational speed Nout is a rotational speed of the output shaft 30.

In the power transmission device 16, the power transmission path PT that transmits the power from the engine 12 to the driving wheels 14 is switched between the first power transmission path PT1 and the second power transmission path PT2 in accordance with the traveling state of the vehicle 10. The power transmission device 16 therefore includes a plurality of engagement devices for selectively transmitting the power via the first power transmission path PT1 or the second power transmission path PT2. The engagement devices correspond to a mode-switching clutch S1, a reverse brake B1, and a belt-traveling clutch C2, which will be described later.

The mode-switching clutch S1 and the reverse brake B1 are provided in the first power transmission path PT1 (more specifically, the forward/reverse switching device 26). When the mode-switching clutch S1 is switched so as to be able to transmit torque or the reverse brake B1 is engaged, the first power transmission path PT1 can transmit power. The belt-traveling clutch C2 is provided in the second power transmission path PT2. When the belt-traveling clutch C2 is engaged, the second power transmission path PT2 can transmit power.

The engine 12 includes an engine control device 42 having various devices necessary for output control of the engine 12, such as an electronic throttle device, a fuel injection device, and an ignition device. In the engine 12, the engine control device 42 is controlled by an electronic control device (not shown) in accordance with an accelerator operation amount θacc that is an operation amount of an accelerator pedal and that corresponds to a drive request amount for the vehicle 10 by a driver, so that an engine torque Te that is an output torque of the engine 12 is controlled.

The torque converter 20 is provided between the engine 12 and the continuously variable transmission 24, and includes a pump impeller 20p connected to the engine 12 and a turbine runner 20t connected to the input shaft 22. The torque converter 20 is a fluid transmission device that transmits power from the engine 12 to the input shaft 22. The torque converter 20 includes a known lockup clutch LU that can directly connect between the pump impeller 20p and the turbine runner 20t, that is, between input and output rotating members of the torque converter 20. The lockup clutch LU directly connects between the pump impeller 20p and the turbine runner 20t (that is, between the engine 12 and the input shaft 22) in accordance with the traveling state of the vehicle 10. For example, in a relatively high vehicle speed region, the engine 12 and the input shaft 22 are directly connected by the lockup clutch LU.

The power transmission device 16 includes a mechanical oil pump 44 connected to the pump impeller 20p. The oil pump 44 is rotationally driven by the engine 12 to supply an original pressure of hydraulic pressure to a hydraulic control circuit (not shown) provided in the vehicle 10. The hydraulic pressure is used to control shifting of the continuously variable transmission 24, to generate a belt clamping pressure in the continuously variable transmission 24, to switch operating states of the engagement devices, such as engagement and disengagement, or to switch an operating state of the lockup clutch LU.

The forward/reverse switching device 26 includes a double-pinion planetary gear unit 26p, the reverse brake B1, and the mode-switching clutch S1. The planetary gear unit 26p is a differential mechanism having three rotating elements, that is, a carrier 26c serving as an input element to which power from the engine 12 is input, a sun gear 26s serving as an output element, and a ring gear 26r serving as a reaction force element. The carrier 26c is connected to the input shaft 22. The ring gear 26r is selectively connected to the case 18 via the reverse brake B1. The reverse brake B1 is a hydraulic friction engagement device provided between the ring gear 26r and the case 18 that is a non-rotating member, and can connect and disconnect between the ring gear 26r and the case 18. The reverse brake B1 can be regarded as a brake according to the invention.

For example, when the reverse brake B1 is engaged and the ring gear 26r is connected to the case 18 to stop the rotation of the ring gear 26r, the sun gear 26s is reversely rotated with respect to a rotation direction of the carrier 26c. The sun gear 26s is disposed radially outward of the input shaft 22, and is connected to a small-diameter gear 48 that is provided so as to be rotatable relative to the input shaft 22. The mode-switching clutch S1 is provided between the carrier 26c and the sun gear 26s. The planetary gear unit 26p can be regarded as a differential mechanism according to the invention, the carrier 26c can be regarded as an input element according to the invention, the sun gear 26s can be regarded as an output element according to the invention, and the ring gear 26r can be regarded as a reaction force element according to the invention.

The gear mechanism 28 includes the small-diameter gear 48, a counter shaft 50, and a large-diameter gear 52 that is provided so as not to rotate relative to the counter shaft 50 and meshes with the small-diameter gear 48. A counter gear 54 is provided on the counter shaft 50 so as not to rotate relative to the counter shaft 50. The counter gear 54 meshes with an output gear 56 provided on the output shaft 30.

The reverse brake B1 is a known hydraulic wet friction engagement device. The reverse brake B1 is provided between the ring gear 26r of the planetary gear unit 26p and the case 18 and is frictionally engaged by a hydraulic actuator. When the reverse brake B1 is engaged, the rotation of the ring gear 26r is stopped. At this time, the sun gear 26s is rotated in a reverse direction (a vehicle reverse traveling direction) with respect to the rotation in a forward direction (a vehicle forward traveling direction) input to the carrier 26c. Therefore, power in the vehicle reverse traveling direction is transmitted through the first power transmission path PT1 so that the vehicle 10 is caused to travel backward.

The belt-traveling clutch C2 is a known hydraulic wet friction engagement device. The belt-traveling clutch C2 is provided between the secondary shaft 62 of the continuously variable transmission 24 and the output shaft 30 and is frictionally engaged by a hydraulic actuator. When the belt-traveling clutch C2 is engaged, the secondary shaft 62 and the output shaft 30 are connected and the second power transmission path PT2 is switched to a state in which power can be transmitted, which enables belt driving with the continuously variable transmission 24. Further, when the belt-traveling clutch C2 is disengaged, the second power transmission path PT2 is interrupted.

The mode-switching clutch S1 is provided in the first power transmission path PT1. Specifically, the mode-switching clutch S1 is provided between the carrier 26c and the sun gear 26s of the planetary gear unit 26p constituting the forward/reverse switching device 26. The mode-switching clutch S1 is configured to be switched between a one-way mode and a free mode. In the one-way mode, power acting in the vehicle forward traveling direction (forward rotation direction) is transmitted while power acting in the vehicle reverse traveling direction (reverse rotation direction) is interrupted. In the free mode, power acting in the vehicle forward traveling direction (forward rotation direction) and power acting in the vehicle reverse traveling direction (reverse rotation direction) are interrupted. The mode of the mode-switching clutch S1 is switched by an actuator 94 described later.

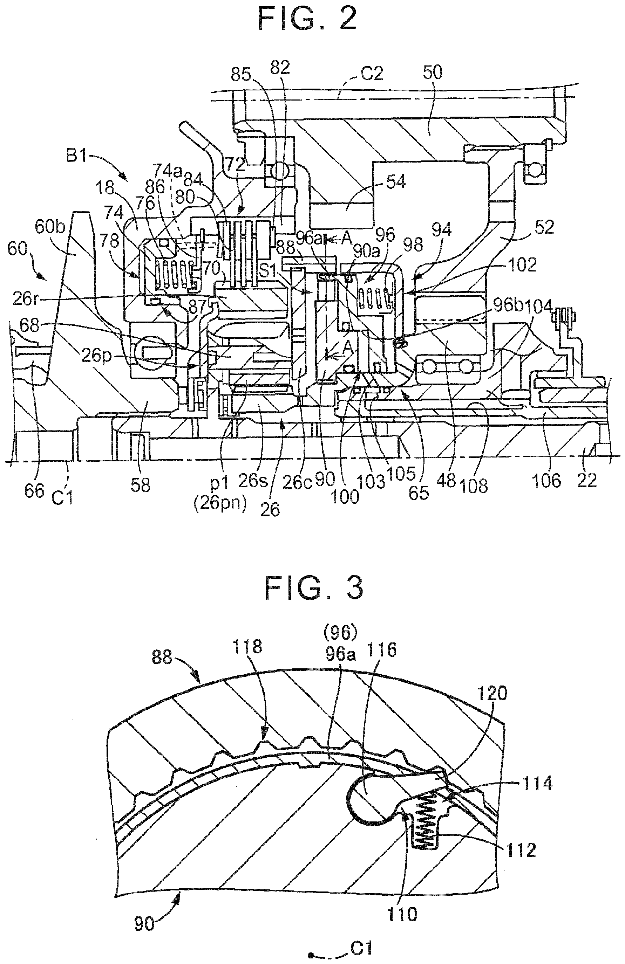

FIG. 2 is a sectional view illustrating a structure around the forward/reverse switching device 26 in the power transmission device 16 of FIG. 1. In FIG. 2, half of the structure, which is lower than a rotational axis C1 of the input shaft 22 (axis C1), is omitted.

As shown in FIG. 2, the input shaft 22 and the primary shaft 58 are disposed so as to be rotatable about the axis C1. The input shaft 22 and the primary shaft 58 are connected by spline-fitting so as not to rotate relative to each other. The primary shaft 58 is provided with a fixed sheave 60b of the primary pulley 60 by integral molding.

A planetary gear unit 26p is disposed radially outward of the input shaft 22. The planetary gear unit 26p is a known double-pinion planetary gear unit including: the sun gear 26s; the carrier 26c supporting an inner pinion gear p1 and an outer pinion gear p2 that mesh with each other so that the inner pinion gear p1 and the outer pinion gear p2 are rotatable and revolvable; and the ring gear 26r that meshes with the sun gear 26s via the pinion gears p1, p2. In FIG. 2, only the inner pinion gear p1, out of the two pinion gears p1 and p2, that meshes with the sun gear 26s is shown.

The sun gear 26s has a cylindrical shape, and has outer teeth that mesh with the inner pinion gear p1, on an outer periphery end thereof on the primary pulley 60 side in the direction of the axis C1. The sun gear 26s is formed of a composite member 65 having the small-diameter gear 48 integrally formed therewith. Outer teeth of the small-diameter gear 48 are provided at an end of the composite member 65 on a side away from the sun gear 26s in the direction of the axis C1. The small-diameter gear 48 is meshed with the outer teeth of the large-diameter gear 52 fixed to the counter shaft 50 that can rotate about an axis C2. Therefore, the power output from the sun gear 26s is transmitted toward the gear mechanism 28.

The carrier 26c supports both ends of a carrier pin 68 by which the inner pinion gear p1 is rotatably supported. When the carrier pin 68 is inserted through the inner pinion gear p1, the inner pinion gear p1 can rotate and can revolve around the axis C1. The ring gear 26r having an annular shape is disposed radially outward of the carrier 26c. The ring gear 26r has, on an inner periphery thereof, inner teeth that mesh with the outer pinion gear p2.

Outer spline teeth 70 are formed on an outer peripheral surface of the ring gear 26r, to which inner friction plates 80 constituting the reverse brake B1 are spline-fitted. The reverse brake B1 includes a friction engagement portion 72, a piston 74, a plurality of springs 76, and a hydraulic chamber 78. The piston 74 is provided so to be able to press the friction engagement portion 72. The springs 76 urge the piston 74 in a direction away from the friction engagement portion 72. The hydraulic chamber 78 is used to generate a thrust force for moving the piston 74 toward the friction engagement portion 72 in the direction of the axis C1.

The friction engagement portion 72 includes the inner friction plates 80 and outer friction plates 84. Inner peripheries of the inner friction plates 80 are spline-fitted to the outer spline teeth 70 of the ring gear 26r. Outer peripheries of the outer friction plates 84 are spline-fitted to the inner spline teeth 82 formed on the case 18. The inner friction plates 80 and the outer friction plates 84 are alternately stacked in the direction of the axis C1. A snap ring 85 is fitted to the inner spline teeth 82 at an end of the friction engagement portion 72 on a side away from the piston 74 in the direction of the axis C1. The snap ring 85 restricts movement of the friction engagement portion 72 in the direction away from the piston 74 in the direction of the axis C1.

The piston 74 is provided so as to be movable in the direction of the axis C1. When the piston 74 moves toward the friction engagement portion 72 in the direction of the axis C1, a protrusion 74a indicated by a broken line presses the friction engagement portion 72, thereby generating an engagement torque between the inner friction plates 80 and the outer friction plates 84 and causing the friction engagement portion 72 to be engaged. At this time, the reverse brake B1 is engaged, so that the ring gear 26r stops rotating. The protrusion 74a of the piston 74 is actually provided at a position different from the position shown in the drawing in the circumferential direction. Therefore, the protrusion 74a is indicated by the broken line.

The piston 74 is fitted in an annular groove 87 formed in the case 18 and having a recess-shaped cross section. Inner and outer peripheral surfaces of the piston 74 are slidable with respect to the annular groove 87 of the case 18, so that the piston 74 is movable in the direction of the axis C1.

The hydraulic chamber 78 is provided on a back side of the piston 74 with respect to the friction engagement portion 72 in the direction of the axis C1. The hydraulic chamber 78 is an annular space surrounded by the piston 74 and the annular groove 87 of the case 18. An O-ring is provided at a sliding contact portion between the inner peripheral surface of the piston 74 and the annular groove 87 of the case 18 and at a sliding contact portion between the outer peripheral surface of the piston 74 and the annular groove 87 of the case 18. Thus, the hydraulic chamber 78 is hermetically sealed. Hydraulic oil is supplied to the hydraulic chamber 78 via an oil passage (not shown).

The springs 76 are interposed between the piston 74 and a support plate 86 fixed to the case 18 in the direction of the axis C1. The springs 76 are arranged at equiangular intervals in the circumferential direction of the support plate 86. The support plate 86 has a disc shape. An outer periphery of the support plate 86 is disposed at a portion of the case 18 where the inner spline teeth 82 are provided, so that the support plate 86 is not movable toward the friction engagement portion 72 in the direction of the axis C1. The springs 76 are each supported by the support plate 86 at one end thereof to urge the piston 74 away from the friction engagement portion 72 in the direction of the axis C1. Thus, while hydraulic oil is not supplied to the hydraulic chamber 78, the friction engagement portion 72 is not pressed by the piston 74 based on the movement of the piston 74 by the springs 76 away from the friction engagement portion 72 in the direction of the axis C1. Therefore, the reverse brake B1 is disengaged.

When hydraulic oil is supplied to the hydraulic chamber 78 via the oil passage (not shown), the piston 74 is moved toward the friction engagement portion 72 in the direction of the axis C1 against an urging force of the springs 76, so that the protrusion 74a of the piston 74 presses the friction engagement portion 72. Here, the friction engagement portion 72 is restrained from moving away from the piston 74 in the direction of the axis C1 by the snap ring 85 fixed to the inner spline teeth 82. A frictional force is therefore generated between the inner friction plates 80 and the outer friction plates 84, so that the friction engagement portion 72 is engaged. At this time, the reverse brake B1 is engaged, and the ring gear 26r is connected to the case 18 to stop rotating.

A portion of the carrier 26c of the planetary gear unit 26p on the side away from the primary pulley 60 in the direction of the axis C1 extends radially outward, and a radially outer end of the portion is connected to an outer ring 88 of the mode-switching clutch S1.

The mode-switching clutch S1 includes the outer ring 88, an inner ring 90, pawls 110, and so forth. The inner ring 90 is disposed radially inward of the outer ring 88. The pawls 110 are interposed between the outer ring 88 and the inner ring 90 in the radial direction. The pawls 110 will be described later. The structure of the mode-switching clutch S1 will be described later.

The actuator 94 for switching the mode of the mode-switching clutch S1 between the one-way clutch mode and the free mode is provided adjacent to the mode-switching clutch S1 in the direction of the axis C1. The actuator 94 is composed of a hydraulic actuator.

The actuator 94 includes a piston 96, a plurality of springs 98, a hydraulic chamber 100, and a spring holding plate 102. The springs 98 urge the piston 96 toward the mode-switching clutch S1 in the direction of the axis C1. The hydraulic chamber 100 is used to generate a thrust force that acts on the piston 96 in the direction away from the mode-switching clutch S1 in the direction of the axis C1. The spring holding plate 102 holds respective one ends of the springs 98.

The piston 96 is a disc member provided with a step. An inner peripheral surface 96b formed of the step of the piston 96 is slidably fitted to an outer peripheral surface 90a formed of a step of the inner ring 90 of the mode-switching clutch S1. The inner peripheral surface 96b of the piston 96 is slidably fitted to the outer peripheral surface of the composite member 65 that constitutes the sun gear 26s and the small-diameter gear 48. Accordingly, the piston 96 can move in the direction of the axis C1. An O-ring is provided at a sliding contact portion between the inner peripheral surface 96b of the piston 96 and the outer peripheral surface 90a of the inner ring 90 and on a sliding contact portion between the composite member 65 and the piston 96. A protrusion 96a is provided at an outer peripheral end of the piston 96 so as to extend toward the mode-switching clutch S1 in the direction of the axis C1.

The hydraulic chamber 100 is an oil-tight space surrounded by the inner ring 90 of the mode-switching clutch S1, the piston 96, and the composite member 65. When hydraulic oil is supplied to the hydraulic chamber 100, the piston 96 is moved away from the mode-switching clutch S1 in the direction of the axis C1 against an urging force of the springs 98, so that the mode-switching clutch S1 is switched to the one-way mode. When hydraulic oil is not supplied to the hydraulic chamber 100, the piston 96 is moved toward the mode-switching clutch S1 in the direction of the axis C1 by the urging force of the springs 98, so that the mode-switching clutch S1 is switched to the free mode. Hydraulic oil is supplied to the hydraulic chamber 100 via a radial oil passage 103 formed in the composite member 65, a radial oil passage 105 formed in a non-rotating member 104, and an axial oil passage 108 formed between the non-rotating member 104 and a turbine shaft 106.

The springs 98 are interposed between the piston 96 and the spring holding plate 102 in the direction of the axis C1, and urge the piston 96 toward the mode-switching clutch S1 in the direction of the axis C1. The spring holding plate 102 has a bottomed cylindrical shape with an L-shaped section, and an inner peripheral end of the spring holding plate 102 is connected to the composite member 65 by welding. Further, an inner peripheral surface of a cylindrical portion of the spring holding plate 102 is in sliding contact with the outer peripheral surface of the piston 96, and an O-ring is provided at a sliding contact portion between the piston 96 and the spring holding plate 102. Thus, a centrifugal hydraulic canceller chamber is formed that is an oil-tight space surrounded by the piston 96, the composite member 65, and the spring holding plate 102.

In the actuator 94 configured as described above, when hydraulic oil is not supplied to the hydraulic chamber 100, the piston 96 is moved toward the mode-switching clutch S1 in the direction of the axis C1 by the urging force of the springs 98, as shown in FIG. 2. At this time, the protrusion 96a of the piston 96 pushes down pawls 110 (described later) of the mode-switching clutch S1, so that the mode-switching clutch S1 is switched to the free mode. In the actuator 94, when hydraulic oil is supplied to the hydraulic chamber 100, the piston 96 is moved away from the mode-switching clutch S1 in the direction of the axis C1 against the urging force of the springs 98. At this time, the protrusion 96a of the piston 96 does not contact the pawls 110 of the mode-switching clutch S1, so that the mode-switching clutch S1 is switched to the one-way mode.

FIG. 3 is a cross-sectional view of the mode-switching clutch S1 taken along a cutting line A represented by a long dashed short dashed line in FIG. 2. FIG. 3 shows the mode-switching clutch S1 switched to the one-way mode. Note that FIG. 3 shows only a part of the mode-switching clutch S1 in the circumferential direction.

As shown in FIG. 3, the outer ring 88 and the inner ring 90 are rotatably provided around the axis C1. A set of the pawl 110 and the spring 112 is arranged between the outer ring 88 and the inner ring 90 in the radial direction. Since FIG. 3 shows only a part of the mode-switching clutch S1 in the circumferential direction, only one set of pole 110 and spring 112 is shown in FIG. 3. However, multiple sets of pawl 110 and spring 112 are actually provided.

Each of the pawls 110 is formed of a plate-like member having a prescribed thickness, and includes a base portion 116 and an engaging portion 120. The base portion 116 has a generally circular shape and is rotatably accommodated in an accommodating portion 114 of the inner ring 90 described later. The engaging portion 120 can be engaged with a notch 118, described later, formed in the outer ring 88.

The accommodating portion 114 is provided in an outer peripheral portion of the inner ring 90. The accommodating portion 114 accommodates the base portion 116 of the pawl 110 so that the base portion 116 is rotatable and also accommodates the spring 112 that urges the engaging portion 120 of the pawl 110 toward the outer ring 88.

A part of the accommodating portion 114, which accommodates the base portion 116 of the pawl 110, has an arc shape that conforms to an outer shape of the base portion 116. A part of the accommodating portion 114, which accommodates the spring 112, has a rectangular shape that conforms to the shape of the spring 112. The spring 112 accommodated in the accommodating portion 114 has one end abutting on a bottom of a portion of the accommodating portion 114, which has a rectangular shape, and has the other end abutting on the engaging portion 120. Thus, the spring 112 urges the engaging portion 120 toward the outer ring 88.

The notches 118 are provided, at equiangular intervals, on an inner periphery of the outer ring 88, that is, at a portion of the outer ring 88, which faces the inner ring 90. Each of the notches 118 is formed to be symmetrical in the circumferential direction of the outer ring 88. Specifically, the notch 118 has a generally triangular shape when viewed in the direction of the axis C1. The engaging portion 120 of the pawl 110 can be engaged with the notch 118.

FIG. 3 shows the pawl 110 with the engaging portion 120 engaged with the notch 118. In FIG. 3, when the outer ring 88 rotates counterclockwise, the inner ring 90 and the outer ring 88 rotate together counterclockwise via the pawl 110 because the engaging portion 120 of the pawl 110 and the notch 118 are abutting on each other to be engaged. When the outer ring 88 rotates clockwise, the notch 118 pushes and runs over the engaging portion 120, so that the relative rotation between the inner ring 90 and the outer ring 88 is allowed. Here, in the embodiment, the outer ring 88 is set to rotate counterclockwise when the power acting in the vehicle forward traveling direction is transmitted from the engine 12 to the outer ring 88. Thus, the mode-switching clutch S1 functions as a one-way clutch, and transmits power acting in the vehicle forward traveling direction, toward the inner ring 90 (that is, toward the gear mechanism 28 and the driving wheels 14) while interrupting power acting in the vehicle reverse traveling direction.

The protrusion 96a of the piston 96 is interposed between the inner ring 90 and the outer ring 88 in the radial direction. The protrusion 96a is fitted with the inner ring 90 so as not to rotate relative to the inner ring 90 and so as to move relative to the inner ring 90 in the direction of the axis C1. Depending on the position of the protrusion 96a in the direction of the axis C1, the mode-switching clutch S1 is switched to either the one-way mode or the free mode. FIG. 3 shows the mode-switching clutch S1 switched to the one-way mode. When the mode-switching clutch S1 is in the one-way mode, the protrusion 96a has moved away from the mode-switching clutch S1 in the direction of the axis C1. At this time, the protrusion 96a and the pawl 110 do not contact each other. Therefore, as shown in FIG. 3, the engaging portion 120 of the pawl 110 can be engaged with the notch 118 of the outer ring 88.

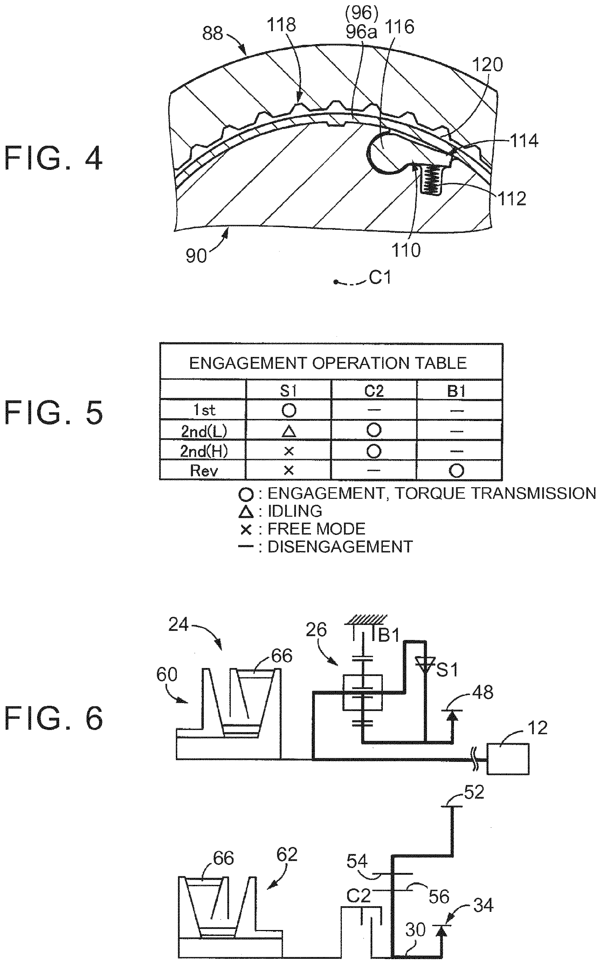

FIG. 4 shows the mode-switching clutch S1 switched to the free mode. FIG. 4 is a cross-sectional view similar to FIG. 3. When the mode-switching clutch S1 is switched to the free mode, the piston 96 is moved toward the mode-switching clutch S1 in the direction of the axis C1 (see FIG. 3), so that the protrusion 96a contacts the engaging portion 120 of the pawl 110 and the pawl 110 is rotated against the urging force of the spring 112. Thus, as shown in FIG. 4, the engaging portion 120 of the pawl 110 is pushed down radially inward by the protrusion 96a. At this time, the engagement between the engaging portion 120 and the notch 118 is released. Therefore, the mode-switching clutch S1 is switched to the free mode in which the inner ring 90 and the outer ring 88 can rotate relative to each other. A distal end of the protrusion 96a is tapered at an inner periphery thereof so as to push down the engaging portion 120 in a transitional period in which the piston 96 moves toward the mode-switching clutch S1 in the direction of the axis C1.

FIG. 5 is an engagement operation table showing engagement states of the engagement devices (reverse brake B1, belt-traveling clutch C1, mode-switching clutch S1) that switch a power transmission state of the power transmission device 16.

In FIG. 5, a column S1 shows an engagement state of the mode-switching clutch S1, a column C2 shows an engagement state of the belt-traveling clutch C2, and a column B1 shows an engagement state of the reverse brake B1. In the column S1, a mark "○" indicates torque transmission in the one-way mode of the mode-switching clutch S1, a mark "Δ" indicates idling in the one-way mode of the mode-switching clutch S1, and a mark "× " indicates the free mode of the mode-switching clutch S1. In the columns C2 and B1, the mark "○" indicates engagement of each of the belt-traveling clutch C2 and the reverse brake B1, and a mark "-" indicates disengagement of each of the belt-traveling clutch C2 and the reverse brake B1.

An indication "1st" in FIG. 5 corresponds to gear driving (forward traveling) in which power from the engine 12 is transmitted to the driving wheels 14 via the first power transmission path PT1. When the power transmission state is switched to "1st", the mode-switching clutch S1 is switched to the one-way mode and the belt-traveling clutch C2 and the reverse brake B1 are disengaged. When the belt-traveling clutch C2 is disengaged, the second power transmission path PT2 is interrupted. When the reverse brake B1 is disengaged, the ring gear 26r is allowed to rotate. When the mode-switching clutch S1 is switched to the one-way mode in that state, power acting in the vehicle forward traveling direction is input from the engine 12 to the carrier 26c of the planetary gear unit 26p. Thus, the power is transmitted to the sun gear 26s via the mode-switching clutch S1. At this time, the rotating elements of the planetary gear unit 26p are integrally rotated, and the power from the engine 12 is transmitted to the gear mechanism 28. Therefore, the power from the engine 12 is transmitted to the driving wheels 14 via the first power transmission path PT1.

FIG. 6 is a skeleton diagram schematically showing a flow of power transmission at the time when the power transmission device 16 is switched to the gear driving ("1st"). In FIG. 6, arrows represented by thick solid lines indicate rotating members to which power is transmitted during the gear driving (during forward traveling). As shown in FIG. 6, when power is output from the engine 12, the power is input to the carrier 26c of the planetary gear unit 26p. When the mode-switching clutch S1 is switched to the one-way mode, the power transmitted to the carrier 26c is further transmitted to the sun gear 26s and the small-diameter gear 48 via the mode-switching clutch S1. The power transmitted to the small-diameter gear 48 is transmitted to the output shaft 30 via the large-diameter gear 52, the counter gear 54, and the output gear 56. Thus, when the power transmission device 16 is switched to the gear driving ("1st"), the power from the engine 12 is transmitted to the output shaft 30 via the first power transmission path PT1 (gear mechanism 28).

An indication "2nd (L)" in FIG. 5 corresponds to the belt driving in which power from the engine 12 is transmitted to the driving wheels 14 via the second power transmission path PT2. When the power transmission device 16 is switched to "2nd (L)", the mode-switching clutch S1 is switched to the one-way mode, and the belt-traveling clutch C2 is engaged while the reverse brake B1 is disengaged. When the belt-traveling clutch C2 is engaged, the power transmission device 16 is switched to the belt driving in which power from the engine 12 is transmitted to the output shaft 30 via the continuously variable transmission 24.

In "2nd (L)", the mode-switching clutch S1 is switched to the one-way mode. Here, the speed ratio EL in the first power transmission path PT1 is larger than the maximum speed ratio ymax of the continuously variable transmission 24. Therefore, when the belt-traveling clutch C2 is engaged, the rotational speed N26s of the sun gear 26s is higher than the rotational speed N26c of the carrier 26c. Accordingly, in the mode-switching clutch S1, the rotational speed of the inner ring 90 corresponding to the output side (driving wheels 14 side) (i.e., rotational speed N26s) is higher than the rotational speed of the outer ring 88 corresponding to the input side (engine 12 side) (i.e., rotational speed N26c), resulting in idling. Thus, power transmission is interrupted by idling in the mode-switching clutch S1, and the first power transmission path PT1 is interrupted. The switching to "2nd (L)" is performed in a relatively low vehicle speed region within a traveling region where belt-driving is performed. When the inner ring 90 and outer ring 88 are idling with the mode-switching clutch S1 switched to the one-way mode, the engaging portions 120 of the pawls 110 and the outer ring 88 contact with each other, whereby dragging occurs. However, the dragging due to the contact is very small in the low vehicle speed region. Therefore, although the mode-switching clutch S1 is in the one-way mode, an influence due to the dragging is negligible.

As with "2nd (L)", an indication "2nd (H)" in FIG. 5 corresponds to the belt driving in which power from the engine 12 is transmitted to the driving wheels 14 via the second power transmission path PT2. When the power transmission device 16 is switched to "2nd (H)", the mode-switching clutch S1 is switched to the free mode and the belt-traveling clutch C2 is engaged while the reverse brake B1 is disengaged. When the belt-traveling clutch C2 is engaged, the power transmission device 16 is switched to the belt driving in which power from the engine 12 is transmitted to the output shaft 30 via the continuously variable transmission 24.

In "2nd (H)", the mode-switching clutch S1 is switched to the free mode. At this time, the inner ring 90 and the outer ring 88 of the mode-switching clutch S1 are completely disconnected. Accordingly, in the mode-switching clutch S1, the engaging portions 120 of the pawls 110 and the outer ring 88 do not contact with each other, which suppresses dragging due to the contact between the engaging portions 120 and the outer ring 88. The switching to "2nd (H)" is performed in a relatively high vehicle speed region within the traveling region where belt-driving is performed. This is because the dragging that occurs when the mode-switching clutch S1 is switched to the one-way mode becomes larger in proportion to the vehicle speed V.

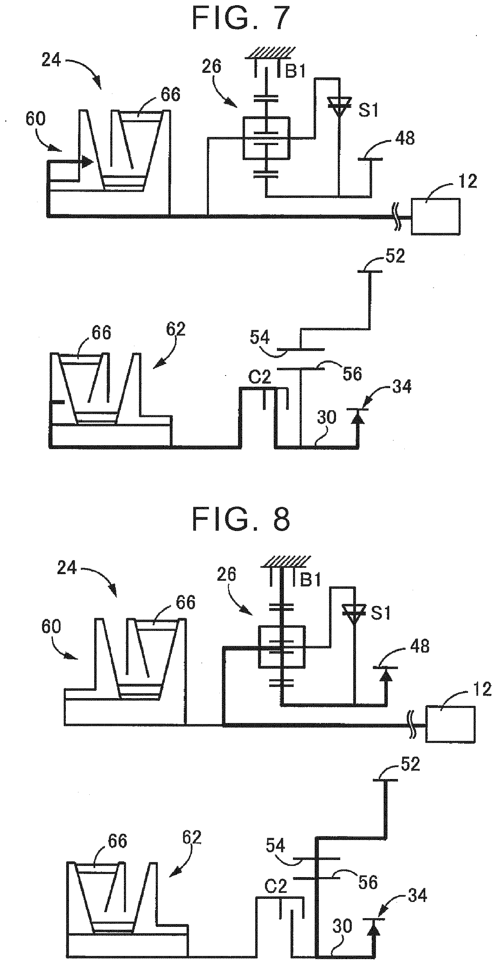

FIG. 7 is a skeleton diagram schematically showing a flow of power transmission when the power transmission device 16 is switched to the belt driving ("2nd (L)", "2nd (H)"). In FIG. 7, arrows represented by thick solid lines indicate rotating members to which power is transmitted during the belt driving. As shown in FIG. 7, when power is output from the engine 12, the power is transmitted to the continuously variable transmission 24, and further transmitted to the output shaft 30 via the primary pulley 60, the transmission belt 66, and the secondary pulley 64 of the continuously variable transmission 24, and the belt-traveling clutch C2. At this time, the reverse brake B1 is disengaged with the mode-switching clutch S1 idling (in the one-way mode) or power transmission thereof interrupted (in the free mode), so that power transmission is interrupted in the first power transmission path PT1.

An indication "Rev" in FIG. 5 corresponds to the gear driving (reverse traveling) in which the power from the engine 12 is transmitted to the driving wheels 14 via the first power transmission path PT1. When the power transmission device 16 is switched to "Rev", the mode-switching clutch S1 is switched to the free mode, the belt-traveling clutch C2 is disengaged, so that the reverse brake B1 is engaged. When the belt-traveling clutch C2 is disengaged, the power transmission of the second power transmission path PT2 is interrupted.

The reverse brake B1 is engaged, so that the ring gear 26r of the planetary gear unit 26p stops rotating. Further, the mode-switching clutch S1 is switched to the free mode, so that relative rotation is allowed between the carrier 26c and the sun gear 26s. At this time, when power from the engine 12 acting in the forward rotation direction (vehicle forward traveling direction) is input to the carrier 26c in the planetary gear unit 26p, power acting in the reverse rotation direction (vehicle reverse traveling direction) is output from the sun gear 26s with the differential action of the planetary gear unit 26p. Therefore, the power acting in the vehicle reverse traveling direction is transmitted to the gear mechanism 28, so that the power transmission device 16 is switched to the gear driving that causes the vehicle 10 to travel backward.

When the mode-switching clutch S1 is switched to the one-way mode during reverse traveling, the carrier 26c and the sun gear 26s interfere with each other in the planetary gear unit 26p, and the sun gear 26s cannot rotate in the reverse rotation direction (vehicle reverse traveling direction). In contrast, when the mode-switching clutch S1 is switched to the free mode, the relative rotation between the carrier 26c and the sun gear 26s is allowed, which makes the rotation of the sun gear 26s in the reverse rotation direction possible.

FIG. 8 is a skeleton diagram schematically showing a flow of power transmission when the power transmission device 16 is switched to the gear driving ("Rev"). In FIG. 8, arrows represented by thick solid lines indicates rotating members to which power is transmitted during the gear driving (reverse traveling). As shown in FIG. 8, when the power output from the engine 12 is input to the carrier 26c of the planetary gear unit 26p, power acting in the reverse rotation direction (vehicle reverse traveling direction) is output from the sun gear 26s because the reverse brake B1 stops the rotation of the ring gear 26r. Thus, when the power transmission device 16 is switched to the gear driving ("Rev"), the power acting in the vehicle reverse traveling direction is output from the sun gear 26s, and the power is transmitted to the output shaft 30 via the gear mechanism 28.

In the power transmission device 16, when the power transmission path PT is switched between the first power transmission path PT1 and the second power transmission path PT2, the torque capacity of the belt-traveling clutch C2 is controlled with the mode-switching clutch S1 switched to the one-way mode. Thus, it is possible to switch the power transmission path PT while suppressing a shock that occurs during the switching transition period.

For example, when the power transmission path PT is switched from the first power transmission path PT1 to the second power transmission path PT2, the torque capacity of the belt-traveling clutch C2 is controlled to increase so as to follow a preset target value, with the mode-switching clutch S1 switched to the one-way mode. At this time, the mode-switching clutch S1 functions as a one-way clutch in the first power transmission path PT1, so that the first power transmission path PT1 is interrupted at an appropriate timing, which suppresses a shock that occurs during the switching transition period. When the power transmission path PT is switched from the second power transmission path PT2 to the first power transmission path PT1, the torque capacity of the belt-traveling clutch C2 is controlled to decrease so as to follow a preset target value, with the mode-switching clutch S1 switched to the one-way mode. At this time, the mode-switching clutch S1 functions as a one-way clutch in the first power transmission path PT1, so that the first power transmission path PT1 is switched to transmit power at an appropriate timing, which suppresses a shock that occurs during the switching transition period. Since it is only necessary to control the belt-traveling clutch C2 during the switching transition period of the power transmission path PT, complication of the control during the switching transition period is suppressed.

According to the embodiment, when the mode-switching clutch S1 is switched to the one-way mode and the belt-traveling clutch C2 is disengaged, forward traveling based on transmission of power from the engine 12 to the first power transmission path PT1 is enabled, as described above. Further, when the mode-switching clutch S1 is switched to the one-way mode or the free mode and the belt-traveling clutch C2 is engaged, forward traveling based on transmission of power from the engine 12 to the second power transmission path PT2 is enabled. When the mode-switching clutch S1 is switched to the one-way mode during the switching transition period in which the power transmission path PT is switched between the first power transmission path PT1 and the second power transmission path PT2, the mode-switching clutch S1 functions as a one-way clutch. Therefore, power transmission and interruption of the first power transmission path PT1 during the switching transition period is automatically switched at an appropriate timing by the mode-switching clutch S1, which suppresses a shock that occurs during the switching transition period. In addition, since the power transmission path PT can be switched only by controlling the torque capacity of the belt-traveling clutch C2, it is possible to suppress complication of control during the switching transition period.

Furthermore, according to the present embodiment, when power from the engine 12 is input to the carrier 26c of the planetary gear unit 26p with the mode-switching clutch S1 switched to the one-way mode, for example, the power is transmitted to the sun gear 26s via the mode-switching clutch S1. This enables forward traveling based on the transmission of power to the first power transmission path PT1. In addition, when power from the engine 12 is transmitted to the carrier 26c with the mode-switching clutch S1 switched to the free mode and the reverse brake B1 engaged, the rotation of the ring gear 26r is stopped so that the sun gear 26s is rotated in the opposite direction. This enables the reverse traveling based on the transmission of power acting in the vehicle reverse traveling direction through the first power transmission path PT1. As described above, the mode of the mode-switching clutch S1 and the engagement state of the reverse brake B1 are switched, so that the forward traveling and reverse traveling using the first power transmission path PT1 become possible.

Further, according to the embodiment, when the reverse brake B1 is engaged, the sun gear 26s is reversely rotated with respect to the carrier 26c. At this time, if the mode-switching clutch S1 has been switched to the one-way mode, the carrier 26c and the sun gear 26s interfere with each other, thereby making the rotation difficult. In contrast, when the mode-switching clutch S1 is switched to the free mode, the relative rotation between the carrier 26c and the sun gear 26s is allowed, which makes the reverse rotation of the sun gear 26s possible.

Further, according to the present embodiment, the speed ratio EL in the first power transmission path PT1 is larger than the maximum speed ratio ymax of the second power transmission path PT2. Therefore, with the belt-traveling clutch C2 engaged, the rotational speed N26s of the inner ring 90 corresponding to the output side of the mode-switching clutch S1 is higher than the rotational speed N26c of the outer ring 88 corresponding to the input side. At this time, although the mode-switching clutch S1 is switched to the one-way mode, the mode-switching clutch S1 is idling and the power transmission is interrupted. Therefore, the power transmission of the first power transmission path PT1 is interrupted. Thus, during the forward traveling achieved by the engagement of the belt-traveling clutch C2 and the power transmission to the second power transmission path PT2, the first power transmission path PT1 is interrupted, so that the interference between the first power transmission path PT1 and the second power transmission path PT2 is suppressed.

Although the embodiment of the invention has been described in detail based on the drawings, the invention can also be applied to other embodiments.

For example, in the above-described embodiment, the mode-switching clutch S1 is configured to be switched between the one-way mode and the free mode. However, a lock mode may be provided, besides the above two modes, in which the inner ring 90 and the outer ring 88 are locked so as not to rotate relative to each other.

The structure of the mode-switching clutch S1 according to the above embodiment is one example, and any configuration that can be switched between the one-way mode and the free mode may be applied as appropriate.

In the above embodiment, the mode-switching clutch S1 is provided on an upstream side (engine 12 side) of the gear mechanism 28 in the first power transmission path PT1. However, the mode-switching clutch S1 may be provided on a downstream side (driving wheels 14 side) of the gear mechanism 28.

Although the belt-type continuously variable transmission 24 is provided in the second power transmission path PT2 in the above embodiment, the transmission is not limited thereto. For example, a toroidal continuously variable transmission or a stepped transmission may be provided.

In the above embodiment, the belt-traveling clutch C2 is provided on the downstream side (driving wheels 14 side) of the continuously variable transmission 24 in the second power transmission path PT2. However, the belt-traveling clutch C2 may be provided on the upstream side (engine 12 side) of the continuously variable transmission 24.

In the above embodiment, the mode-switching clutch S1 is switched between the one-way mode and the free mode in accordance with the traveling state of the vehicle 10 during the belt driving. However, the mode-switching clutch S1 may be fixed to either of the modes during the belt driving.

In the above embodiment, the planetary gear unit 26p is a double-pinion planetary gear unit. However, the planetary gear unit 26p may be a single-pinion planetary gear unit. In short, any differential mechanism may be applied as appropriate that is configured such that the rotation of the reaction force element is stopped to cause the output element to rotate in the direction that is opposite to the rotation direction of the input element.

The above description is only an embodiment, and the invention can be implemented by making various modifications and improvements based on the knowledge of those skilled in the art.

## Claims

1. A vehicle power transmission device comprising:
an input shaft (20);
an output shaft (30);
a first power transmission path (PT1) configured to transmit power between the input shaft (20) and the output shaft (30); and
a second power transmission path (PT2) configured to transmit power between the input shaft (20) and the output shaft (30), wherein:
the first power transmission path (PT1) includes a mode-switching clutch (S1) configured to be switched between a one-way mode and a free mode, the one-way mode being a mode in which power acting in a forward rotation direction is transmitted while power acting in a reverse rotation direction is interrupted, and the free mode being a mode in which power acting in the forward rotation direction and power acting in the reverse rotation direction are interrupted; and
the second power transmission path (PT2) includes a control clutch (C2) configured such that a torque capacity of the control clutch (C2) is controllable.

2. The vehicle power transmission device according to claim 1, wherein:
the first power transmission path (PT1) includes a differential mechanism (26p) having an input element (26c), an output element (26s), and a reaction force element (26r), the input element (26c) receiving an input of power from a power source, the reaction force element (26r) configured to be stopped from rotating to cause the input element (26c) and the output element (26s) to rotate in opposite directions;
the mode-switching clutch (S1) is disposed to connect the input element (26c) and the output element (26s); and
the first power transmission path (PT1) includes a brake (B1) configured to connect and disconnect the reaction force element (26r) and a non-rotating member (18).

3. The vehicle power transmission device according to claim 2, wherein:
the brake (Bl) is configured to connect the reaction force element (26r) and the non-rotating member (18) when a vehicle travels backward;
the mode-switching clutch (S1) is configured to be switched to the free mode when the vehicle travels backward; and
the control clutch (C2) is configured to be disengaged when the vehicle travels backward.

4. The vehicle power transmission device according to any one of claims 1 to 3, wherein:
the first power transmission path (PT1) includes a gear mechanism (28) having a prescribed speed ratio;
the second power transmission path (PT2) includes a transmission (24); and
the speed ratio between the input shaft (20) and the output shaft (30) in the first power transmission path (PT1) is set to a value larger than a maximum speed ratio set between the input shaft (20) and the output shaft (30) in the second power transmission path (PT2).
